# EUROPÄISCHE PATENTSCHRIFT

(11) **EP 3 323 186 B1**
(45) Veröffentlichungstag und Bekanntmachung des Hinweises auf die Patenterteilung: **18.03.2020**
(21) Anmeldenummer: 16729780.3
(22) Anmeldetag: 16.06.2016
(51) Int. Cl.: B60L 53/12, H02J 50/12

(54) **ANORDNUNG ZUR INDUKTIVEN ÜBERTRAGUNG ELEKTRISCHER ENERGIE VON EINEM STATIONÄR ANGEORDNETEN PRIMÄRLEITER AN EINE RELATIV DAZU BEWEGBARE VORRICHTUNG UND VERFAHREN ZUM BETREIBEN DER ANORDNUNG**
ASSEMBLY FOR THE INDUCTIVE TRANSFER OF ELECTRICAL ENERGY FROM A STATIONARY PRIMARY CONDUCTOR TO A DEVICE THAT CAN MOVE RELATIVE TO SAME, AND METHOD FOR OPERATING THE ASSEMBLY
AGENCEMENT PERMETTANT LA TRANSMISSION INDUCTIVE D'UNE ÉNERGIE ÉLECTRIQUE DEPUIS UN CONDUCTEUR PRIMAIRE STATIONNAIRE VERS UN DISPOSITIF MOBILE PAR RAPPORT AUDIT CONDUCTEUR PRIMAIRE ET PROCÉDÉ PERMETTANT DE FAIRE FONCTIONNER CET AGENCEMENT

(30) Priorität: 16.07.2015 DE 102015009073
(43) Veröffentlichungstag der Anmeldung: 23.05.2018
(73) Patentinhaber: SEW-EURODRIVE GmbH & Co. KG, 76646 Bruchsal (DE)
(72) Erfinder: SIMON, Olaf, 76646 Bruchsal, Untergrombach (DE); SCHMIDT, Josef, 76676 Graben-Neudorf (DE); MAHLEIN, Jochen, 76139 Karlsruhe (DE); BÖCKLE, Jürgen, 76646 Bruchsal (DE)
(86) Internationale Anmeldenummer: PCT/EP2016/001016
(87) Internationale Veröffentlichungsnummer: WO 2017/008878

(56) Entgegenhaltungen:
- EP-A1- 1 022 677
- EP-A1- 2 696 468
- EP-A2- 0 609 964
- US-A1- 2013 285 606
- US-A1- 2014 152 117
- US-A1- 2015 194 815

## Beschreibung

Die Erfindung betrifft eine Anordnung zur induktiven Übertragung elektrischer Energie von einem stationär angeordneten Primärleiter an eine relativ dazu bewegbare Vorrichtung und ein Verfahren zum Betreiben der Anordnung.

Es ist allgemein bekannt, dass bei einer transformatorischen Anordnung zur induktiven Übertragung elektrischer Energie von einem Primärleiter an eine Sekundärwicklung Energie über die induktive Kopplung zwischen Primärleiter und Sekundärwicklung übertragen wird.

Aus der US 2013/285606 A1 ist als nächstliegender Stand der Technik eine Anordnung zur induktiven Energieübertragung bekannt.

Aus der EP 1 022 677 A1 ist eine berührungslos versorgte IC Karte bekannt.

Aus der EP 2 696 468 A1 ist eine Leistungsübertragungsschaltung bekannt.

Aus der EP 0 609 964 A2 ist eine adjustierbar Reaktanzschaltung bekannt.

Aus der US 2015 / 194 815 A1 ist eine induktive Versorgung mit verschiedenen Leistungsstärken bekannt.

Aus der US 2014/0152117 A1 ist ein drahtloses Leistungsübertragungssystem mit einem selbstregulierenden drahtlosen Leistungsempfänger bekannt.

Der Erfindung liegt daher die Aufgabe zugrunde, eine Anordnung zur induktiven Übertragung elektrischer Energie von einem stationär angeordneten Primärleiter an eine relativ dazu bewegbare Vorrichtung baukastenfähig weiterzubilden, wobei eine hohe Anzahl von Varianten mit geringem Aufwand erreichbar sein soll

Erfindungsgemäß wird die Aufgabe bei der Anordnung nach den in Anspruch 1 und bei dem Verfahren nach den in Anspruch 4 angegebenen Merkmalen gelöst.

Von Vorteil ist dabei, dass die Resonanzfrequenz mittels entsprechender Ansteuerung des Schalters steuerbar ist. In einer ersten Schalterstellung weist der Schwingkreis eine andere Resonanzfrequenz auf als in einer zweiten Schalterstellung. Somit ist abhängig von der Schalterstellung ein unterschiedlicher Wert an Resonanzfrequenz bewirkbar. Vorteiligerweise ist somit eine Baureihe herstellbar, bei welcher an der Sekundäreinheit der bewegbaren Vorrichtung durch Wahl der Schalterstellung ein Anpassen an die Frequenz des von der stationär angeordnete Einspeiseeinheit in den Primärleiter eingeprägten Wechselstromes bewirkbar ist.

Erfindungsgemäß wird die an der Kapazitätsanordnung abfallende Spannung einem Gleichrichter zugeführt, dessen Ausgangsspannung, insbesondere dessen ausgangsseitige Gleichspannung, erfasst wird, insbesondere also einem Mittel zur Spannungserfassung zugeführt wird. Von Vorteil ist dabei, dass abhängig von der erfassten Spannung der Schalter ansteuerbar ist. Insbesondere ist bei Überschreiten eines vorgegebenen Schwellwertes die Schalterstellung wechselbar. Auf diese Weise ist ein Überspannungsschutz realisierbar.

Erfindungsgemäß wird von einer Steuerung abhängig vom erfassten Spannungswert der Schalter angesteuert, insbesondere also von der Steuerung abhängig vom erfassten Spannungswert ein Steuersignal zur Ansteuerung des Schalters erzeugt wird. Von Vorteil ist dabei, dass sogar eine Regelung realisierbar ist, indem die erfasste Spannung als Istwert verwendet wird, mit einem Sollwert verglichen wird und abhängig von der somit bestimmten Regelabweichung ein Steuersignal zum Ansteuern des Schalters bestimmt wird. Somit ist nicht nur eine zu hohe Spannung verhinderbar, sondern auch ein gewünschter Spannungswert erreichbar.

Erfindungsgemäß ist das Steuersignal zur Ansteuerung des Schalters pulsweitenmoduliert. Von Vorteil ist dabei, dass ein beliebiger Wert an Resonanzfrequenz einstellbar ist, wobei vorzugsweise die Pulsweitenmodulationsfrequenz höher als die Resonanzfrequenz ist, insbesondere höher als das Doppelte der Resonanzfrequenz.

Bei einer vorteilhaften Ausgestaltung ist die Pulsweitenmodulationsfrequenz größer als die Resonanzfrequenz des aus der Sekundärwicklung oder der Reihenschaltung aus Sekundärwicklung und erster Kapazität gebildeten Schwingkreises. Von Vorteil ist dabei, dass ein Regeln der Spannung ermöglicht ist.

Erfindungsgemäß entspricht bei einer ersten Schalterstellung des Schalters die Resonanzfrequenz des Schwingkreises der Frequenz des in den Primärleiter eingespeisten Wechselstromes
und bei einer anderen Schalterstellung des Schalters entspricht die Resonanzfrequenz des Schwingkreises der Frequenz des in den Primärleiter eingespeisten Wechselstromes nicht. Von Vorteil ist dabei, dass bei der ersten Schalterstellung induktiv möglichst effektiv Energie übertragbar ist. In der zweiten Schalterstellung allerdings schwingen Strom und Spannung nicht auf, weil die Resonanzfrequenz nicht der Frequenz des in den Primärleiter eingeprägten Wechselstromes entspricht. Somit sind hohe Spannungen vermeidbar. Weiter ist von Vorteil ist dabei, dass aus der sekundärseitig erfassten Spannung die in den Primärleiter eingeprägte Frequenz bestimmbar ist und somit die Schalterstellung derart wählbar ist, dass eine hohe elektrische Leistung übertragbar ist. Jedoch wird bei Auftreten von Überspannung an der zweiten Kapazität die Schalterstellung auf jeden Fall gewechselt und zwar in diejenige Schalterstellung, deren zugeordnete Resonanzfrequenz nicht der in den Primärleiter eingeprägten Frequenz entspricht.

Bei einer vorteilhaften Ausgestaltung wird bei Überschreiten eines Schwellwertes durch die erfasste Spannung der Schalter in die andere Schalterstellung gebracht, insbesondere zum Schutz gegen Überspannung, insbesondere von der Steuerung. Von Vorteil ist dabei, dass ein Überspannungsschutz in einfacher Weise ausführbar ist.

Wichtige Merkmale bei dem Verfahren zum Betreiben der Anordnung sind, dass eine sekundärseitig vorhandene Spannung, insbesondere die an der Sekundärwicklung anliegende Spannung oder die an der zweiten Kapazität anliegende Spannung, erfasst wird und aus dem zugehörigen Spannungsverlauf die Frequenz bestimmt wird, insbesondere die Frequenz des in den Primärleiter eingeprägten Stromes bestimmt wird,
und die Schalterstellung derart ausgewählt wird, dass die daraus resultierende Resonanzfrequenz, insbesondere also die Resonanzfrequenz des aus der Sekundärwicklung oder der Reihenschaltung aus Sekundärwicklung und erster Kapazität gebildeten Schwingkreises, der Frequenz des in den Primärleiter eingeprägten Wechselstromes möglichst nahe liegt oder entspricht.

Von Vorteil ist dabei, dass eine möglichst große elektrische Leistung übertragbar ist.

Bei einer vorteilhaften Ausgestaltung wird die erfasste Spannung mit einem, insbesondere dem, Schwellwert verglichen, bei dessen Überschreitung die Schalterstellung gewechselt wird, insbesondere also die Schalterstellung ausgewählt wird, sodass die daraus resultierende Resonanzfrequenz, insbesondere also die Resonanzfrequenz des aus der Sekundärwicklung oder der Reihenschaltung aus Sekundärwicklung und erster Kapazität gebildeten Schwingkreises, sich von der Frequenz des in den Primärleiter eingeprägten Wechselstromes möglichst stark unterscheidet, insbesondere also nicht gleicht.

Von Vorteil ist dabei, dass bei Überspannung die Schalterstellung umgeschaltet wird und somit ein Schaden vermeidbar ist. Eine solche Überspannung kann beispielsweise dann auftreten, wenn die Leitung vom Gleichrichter zum Energiespeicher unterbrochen wird.

Die Erfindung wird nun anhand einer Abbildung näher erläutert:

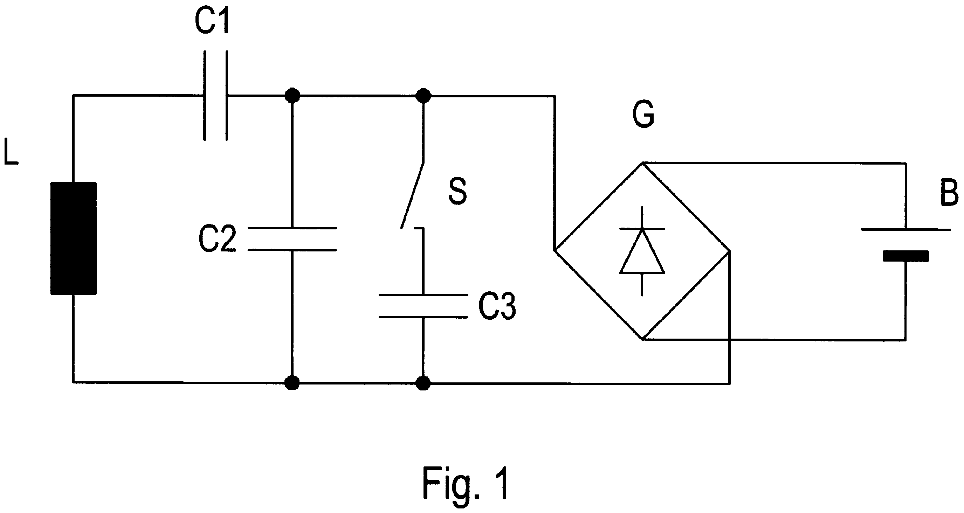

In der Figur 1 ist ein Schaltplan der Sekundärseite der erfindungsgemäßen Anordnung schematisch skizziert.

Die erfindungsgemäße Anordnung weist einen Primärleiter auf, der von einer Wechselstromquelle mit einem mittelfrequenten Wechselstrom beaufschlagt wird, insbesondere wobei die Frequenz des Wechselstroms zwischen 10 und 1000 kHz beträgt.

Eine Sekundärwicklung L ist an der Unterseite einer bewegbaren Vorrichtung, insbesondere Wagen einer Einschienenhängebahn oder Fahrzeug, angeordnet und induktiv koppelbar mit dem Primärleiter.

Der Sekundärwicklung oder der aus der Sekundärwicklung und einer ersten Kapazität C1 gebildeten Reihenschaltung ist eine Kapazität C parallelgeschaltet, die eine zweite Kapazität C2 aufweist, der mittels eines steuerbaren Schalters S eine dritte Kapazität C3 parallel zuschaltbar ist.

Somit weist die Kapazität C also abhängig vom Steuersignal des Schalters S entweder den Wert C2 oder den aus der Parallelschaltung von C2 und C3 gebildeten Wert auf, also 1 / (1/C2 + 1/C3).

Die Sekundärwicklung samt der Kapazitäten (C1, C2, C3) bilden einen Schwingkreis, dessen Resonanzfrequenz der Frequenz des in den Primärleiter eingeprägten Wechselstroms entspricht. Auf diese Weise ist auch bei schwacher induktiver Kopplung ein hoher Wirkungsgrad bei der induktiven Übertragung elektrischer Energie erreichbar.

Wenn nun aber der Schalter in die andere Schalterstellung gebracht wird, weist der Schwingkreis eine Resonanzfrequenz auf, die abweicht von der Frequenz des in den Primärleiter eingeprägten Wechselstromes. Somit ist durch diese Schalterstellung ein Schutz vor Überspannung ausbildbar.

Im konkreten Ausführungsbeispiel ist die Resonanzfrequenz des Schwingkreises in der ersten Schalterstellung zwischen 130 und 145 kHz. In der zweiten Schalterstellung beträgt sie zwischen 80 und 90 kHz.

Somit entspricht bei Wahl einer der beiden Schalterstellungen die Resonanzfrequenz der Frequenz des in den Primärleiter eingespeisten Wechselstroms. In der anderen Schalterstellung schwingt der Schwingkreis nicht auf. Somit wird nur der über die induktive Kopplung übersetzte Strom erreicht.

Wie in Figur 1 gezeigt, wird die an der Kapazität C2 abfallende Spannung einem Gleichrichter G zugeführt, aus dessen Ausgangsseite direkt oder über eine Ladeschaltung der Energiespeicher B beladen wird.

Die Anordnung weist auch ein Mittel zur Überwachung der Spannung an der Ausgangsseite des Gleichrichters auf. Bei Detektion von Überspannung, also einem Spannungswert, der einen vorgegebenen Schwellwert überschreitet, wird der Schalter derart angesteuert, dass dieser in diejenige Schalterstellung übergeht, bei welcher die Resonanzfrequenz des dann erreichten Schwingkreise nicht der Frequenz des in den Primärleiter eingeprägten Wechselstromes entspricht. Somit wird das Aufschwingen des Schwingkreises unterdrückt und gefährlich hohe Überspannung vermieden.

Die bei einem Defekt auftretende Überspannung ist also unterdrückbar. Im Normalbetrieb, also bei nicht vorhandener Überspannung, wird die Schalterstellung derart angesteuert, dass die zugehörige Resonanzfrequenz des sekundärseitigen Schwingkreises einen möglichst geringen Unterschied zur Frequenz des in den Primärleiter eingeprägten Wechselstroms aufweist.

Bei einem weiteren erfindungsgemäßen Ausführungsbeispiel ist durch pulsweitenmodulierte Ansteuerung des Schalters, wobei die Pulsweitenmodulationsfrequenz höher ist als die Resonanzfrequenz, erreichbar, dass die Resonanzfrequenz einen Wert annimmt, der zwischen den durch das jeweilige dauerhafte Anlegen der beiden Schalterstellungen erreichbaren Resonanzfrequenzen liegt. Im konkreten Beispiels wird also eine Resonanzfrequenz zwischen 80 und 130 kHz erreichbar. Abhängig von der am Ausgang des Gleichrichters erfassten Spannung ist somit die Resonanzfrequenz auf einen vorgegebenen Sollwert hin regelbar. Hierzu wird vorzugsweise ein linearer Regler, wie beispielsweise PI-Regler verwendet.

### Bezugszeichenliste

L Sekundärwicklung
C1 erste Kapazität
C2 zweite Kapazität
C3 dritte Kapazität
S steuerbarer Schalter
B Energiespeicher, insbesondere Akkumulator oder Batterie
G Gleichrichter

## Patentansprüche

1. Anordnung, umfassend einen stationär angeordneten Primärleiter und eine relativ dazu bewegbare Vorrichtung, wie Fahrzeug oder Mobilteil, zur induktiven Übertragung elektrischer Energie von dem Primärleiter an die bewegbare Vorrichtung,
wobei die bewegbare Vorrichtung, insbesondere an ihrer Unterseite, eine Sekundärwicklung (L) aufweist, die induktiv koppelbar ist mit dem Primärleiter, wobei der aus der Sekundärwicklung (L) und einer ersten Kapazität (C1) gebildeten Reihenschaltung eine Kapazitätsanordnung parallel zugeschaltet ist, die eine zweite Kapazität (C2) aufweist, der mittels eines steuerbaren Schalters (S) eine dritte Kapazität (C3) parallel zuschaltbar ist,
wobei die Sekundärwicklung (L) und die erste, zweite und dritte Kapazität (C1, C2, C3) einen Schwingkreis bilden,
wobei die an der Kapazitätsanordnung abfallende Spannung einem Gleichrichter (G) zugeführt wird, dessen ausgangsseitige Gleichspannung einem Mittel zur Spannungserfassung zugeführt wird,
wobei eine Steuerung der Anordnung dazu eingerichtet ist, den Schalter (S) abhängig von der, dem Mittel zur Spannungserfassung zugeführten Gleichspannung anzusteuern,
wobei ein Steuersignal der Steuerung zur Ansteuerung des Schalters (S) pulsweitenmoduliert ist, **dadurch gekennzeichnet, dass** die Anordnung ein Mittel zur Spannungserfassung der an der zweiten Kapazität abfallenden Spannung aufweist, wobei die Anordnung dazu eingerichtet ist, aus einem Spannungsverlauf der an der zweiten Kapazität abfallenden Spannung eine Frequenz eines in den Primärleiter eingespeisten Wechselstromes zu bestimmen, und dadurch, dass
bei einer ersten Schalterstellung des Schalters (S) die Resonanzfrequenz des Schwingkreises der Frequenz des in den Primärleiter eingespeisten Wechselstromes entspricht und bei einer anderen Schalterstellung des Schalters (S) die Resonanzfrequenz des Schwingkreises der Frequenz des in den Primärleiter eingespeisten Wechselstromes nicht entspricht.

2. Anordnung nach Anspruch 1,
**dadurch gekennzeichnet, dass**
die Pulsweitenmodulationsfrequenz größer ist als die Resonanzfrequenz des Schwingkreises.

3. Anordnung nach Anspruch 1 oder 2, wobei die Steuerung dazu eingerichtet ist, bei Überschreiten eines Schwellwertes durch die erfasste Gleichspannung den Schalter (S) in die andere Schalterstellung zu bringen, insbesondere zum Schutz gegen Überspannung.

4. Verfahren zum Betreiben der Anordnung nach einem der vorangegangenen Ansprüche, umfassend das induktive Übertragen elektrischer Energie von dem Primärleiter an die bewegbare Vorrichtung.

## Claims

1. Assembly, comprising a primary conductor which is arranged in a stationary manner and a device, such as a vehicle or a mobile part, which is movable relative thereto, for inductively transferring electrical energy from the primary conductor to the movable device,
wherein the movable device has, in particular on the underside thereof, a secondary winding (L) which can be inductively coupled to the primary conductor,
wherein a capacitor assembly is connected in parallel with the series circuit formed of the secondary winding (L) and a first capacitor (C1), said capacitor assembly comprising a second capacitor (C2) with which a third capacitor (C3) can be connected in parallel by means of a controllable switch (S),
wherein the secondary winding (L) and the first, second and third capacitor (C1, C2, C3) form a resonant circuit,
wherein the voltage dropping across the capacitor assembly is supplied to a rectifier (G), the output-side DC voltage of which is supplied to a voltage detection means,
wherein a controller of the assembly is configured to actuate the switch (S) as a function of the DC voltage supplied to the voltage detection means,
wherein a control signal of the controller for actuating the switch (S) is pulse-width-modulated, **characterized in that** the assembly has a voltage detection means for detecting the voltage dropping across the second capacitor, wherein the assembly is configured to determine, from a voltage characteristic of the voltage dropping across the second capacitor, a frequency of an AC current fed into the primary conductor, and **in that**
in a first switch position of the switch (S) the resonant frequency of the resonant circuit corresponds to the frequency of the AC current fed into the primary conductor, and in another switch position of the switch (S) the resonant frequency of the resonant circuit does not correspond to the frequency of the AC current fed into the primary conductor.

2. Assembly according to claim 1,
**characterized in that**
the pulse width modulation frequency is greater than the resonant frequency of the resonant circuit.

3. Assembly according to claim 1 or 2,
wherein the controller is configured to move the switch (S) into the other switch position if the detected DC voltage exceeds a threshold value, in particular for surge protection purposes.

4. Method for operating the assembly according to any one of the preceding claims, comprising the inductive transfer of electrical energy from the primary conductor to the movable device.

## Revendications

1. Agencement comprenant un conducteur primaire fixe et un dispositif mobile par rapport à celui-ci, tel qu'un véhicule ou une partie mobile, pour la transmission par induction d'énergie électrique du conducteur primaire au dispositif mobile,
dans lequel le dispositif mobile présente, en particulier sur sa face inférieure, un enroulement secondaire (L) qui peut être couplé par induction au conducteur primaire, dans lequel au circuit série formé par l'enroulement secondaire (L) et un premier condensateur (C1) est connecté en parallèle un agencement de condensateurs qui présente un deuxième condensateur (C2) auquel un troisième condensateur (C3) peut être connecté en parallèle au moyen d'un commutateur (S) pouvant être commandé,
dans lequel l'enroulement secondaire (L) et les premier, deuxième et troisième condensateurs (C1, C2, C3) forment un circuit résonant,
dans lequel la tension qui chute sur l'agencement de condensateurs est amenée à un redresseur (G) dont la tension continue côté sortie est amenée à un moyen de détection de tension,
dans lequel un dispositif de commande de l'agencement est conçu pour actionner le commutateur (S) en fonction de la tension continue amenée au moyen de détection de tension,
dans lequel un signal de commande du dispositif de commande pour actionner le commutateur (S) est modulé en largeur d'impulsion,
**caractérisé en ce que** l'agencement présente un moyen pour détecter la tension qui chute sur le deuxième condensateur, l'agencement étant conçu pour déterminer une fréquence d'un courant alternatif qui est injecté dans le conducteur primaire à partir d'une forme d'onde de la tension qui chute sur le deuxième condensateur, et que, dans une première position de commutateur du commutateur (S), la fréquence de résonance du circuit résonant correspond à la fréquence du courant alternatif injecté dans le conducteur primaire et, dans une autre position de commutateur du commutateur (S), la fréquence de résonance du circuit résonant ne correspond pas à la fréquence du courant alternatif injecté dans le conducteur primaire.

2. Agencement selon la revendication 1,
**caractérisé en ce que** la fréquence de modulation de largeur d'impulsion est supérieure à la fréquence de résonance du circuit résonant.

3. Agencement selon la revendication 1 ou 2,
dans lequel le dispositif de commande est conçu pour mettre le commutateur (S) dans l'autre position de commutateur lorsque la tension continue détectée dépasse une valeur seuil, en particulier pour la protection contre les surtensions.

4. Procédé de fonctionnement de l'agencement selon l'une des revendications précédentes, comprenant la transmission par induction d'énergie électrique du conducteur primaire au dispositif mobile.
